# EUROPEAN PATENT SPECIFICATION

(11) **EP 0 582 474 B1**
(45) Date of publication and mention of the grant of the patent: **30.10.1996**
(21) Application number: 93306172.3
(22) Date of filing: 04.08.1993
(51) Int. Cl.: C05F 11/02, C05F 11/04, C05F 11/00, A01G 9/10

(54) **Plant growth media**
Bepflanzungsgrund
Support de culture de plantes

(30) Priority: 05.08.1992 GB 9216624
(43) Date of publication of application: 09.02.1994
(73) Proprietor: COURTAULDS CHEMICALS (HOLDINGS) LIMITED, London W1A 2BB (GB)
(72) Inventor: Parkinson, Christopher, Darley Abbey, Derby DE22 1JW (GB)
(74) Representative: Hale, Stephen Geoffrey

(56) References cited:
- EP-A- 0 140 795
- FR-A- 1 563 704
- FR-A- 1 569 696
- DATABASE WPI Section Ch, Week 8911, Derwent Publications Ltd., London, GB; Class A12, AN 89-082866 KOHJIN KK 'Carrier for immobilised soil microorganism - contg. porous inorganic powder and bio-chemically humidified organic material e.g. methyl cellulose, for plant growth acceleration' & JP-A-1 037 232 (KOHJIN K.K.)
- GERHARTZ W & YAMAMOTO Y.S. 'Ullmann's Encyclopedia of Industrial Chemistry A5' 1990 , VCH VERLAG 1986 , WEINHEIM DE * page 484, column 2, line 7 - line 10 *
- ULLMANN'S ENCYC. of IND. CHEM. vol. A10, pg 370, l.19

## Description

This invention relates to growth media for plants and to methods of manufacturing such growth media.

Peat is defined as a material consisting mainly of dead plant organisms that have been transformed in a complicated, uncontrolled chemical process, largely under air exclusion and in the presence of excess water, i.e. bog conditions. Peat is often mixed with mineral fertilisers as trace elements to enhance its nutrient level, and it is widely used as a fibrous growth medium for plants. Re-wetting of peat prior to use as a growth medium or of peat which has become dry during the cultivation of plants is a notoriously difficult procedure. Addition of surface-active agents (surfactants) to peat has been proposed as a method of improving the rewetting properties of the peat. However, many or most such surfactants are phytotoxic and may therefore have deleterious effects on plants grown in peat containing such surfactants. Furthermore, such surfactants are in general relatively expensive materials. It is an object of the invention to provide a peat-based compost which has improved re-wetting properties. It is a further object of the invention to provide a peat-based compost which has improved properties as a growth medium.

DE-A-1592790 describes the preparation of free-flowing peat and peat/fertiliser granules without the need for heavy-pressure equipment. Peat is shredded, mixed with chemical fertiliser or other additives in a screw-worm and passed into a rotary drum or tray in which it is sprayed with water. The moist mass is rolled into granules about 10 mm in size, which are classified, mixed in a drum with a dry adhesive which coats the surface of the granules, such as ethyl cellulose, carboxymethyl cellulose, alginate, dextrin or water-soluble starch, dried and packaged.

JP-A-54-015808 describes a lightweight, water-permeable medium for growing vegetables which comprises 100 parts crushed peat moss, 0.01-5 parts water-soluble organic polymer, 0.01-5 parts surfactant, and optionally a neutralising agent, all parts being by weight. The medium has high water-retaining property, fertiliser-retaining property, high water- and gas-permeability, high swelling property, and it can be shaped. Examples of water-soluble polymers mentioned include methyl cellulose, hydroxyethyl cellulose, poly(vinyl alcohol), starch and polyacrylic acid. Examples of surfactants mentioned include fatty acid salts, higher alcohol sulphuric acid esters, aliphatic amines, sulphates and aliphatic amides.

The invention provides in one aspect a peat compost characterised in that the compost consists essentially of peat in loose uncompressed form and, in addition to any conventional ingredients such as nutrients and fertilisers, from 50 to 1000 grams carboxymethyl cellulose per cubic metre of loose uncompressed peat in uniform admixture with the peat. The volume of the peat is assessed on peat in a loose uncompressed form suitable for use as a growing medium for seeds and plants.

The invention provides in another aspect a process for the manufacture of peat compost, characterised in that from 50 to 1000 grams carboxymethyl cellulose is uniformly mixed with each cubic metre of peat in addition to any conventional ingredients.

The invention provides in a further aspect a method for the cultivation of plants, characterised in that the plants are grown from seeds or cuttings in a peat compost according to the invention or manufactured according to the process of the invention.

The invention provides in a further aspect a method for the cultivation of plants, characterised in that the plants are transplanted into and grown in a peat compost according to the invention or manufactured according to the process of the invention.

The peat may be any peat compost known in the art. Many such composts are available commercially. The peat compost of the invention is a loose uncompressed material suitable for the cultivation of plants.

Carboxymethyl cellulose (CMC) has low toxicity properties and is therefore suitable for use in the cultivation of plants for human or animal consumption. Carboxymethyl cellulose is biodegradable over several months or years in a growth medium, which is an advantage in the peat compost of the invention. Dry films of CMC are wettable and have a high rate of water uptake. CMC for use in the invention preferably has a degree of substitution in the range from 0.4 to 1.1, more preferably in the range from 0.5 to 0.9. CMC is generally available in the form of its sodium salt. Technical or purified (low-salt or salt-free) grades of CMC may be used. Carboxymethyl cellulose for use in the invention preferably has a viscosity in the range from 5 to 10000 mPa.s (centipoise) measured at ambient temperature on a 1% by weight aqueous solution, more preferably in the range 5 to 100 mPa.s (centipoise), further preferably in the range 10 to 25 mPa.s (centipoise). The viscosity is measured under low-shear conditions on the technical or-purified material as supplied. CMC is an ionic polymer which contains carboxyl groups. It is thought that the ionic nature of CMC contributes to the improved rewetting properties of the peat compost of the invention. CMC has the advantage that it is a relatively inexpensive material at the level employed in the peat compost of the invention in comparison with the use of surfactants to improve rewetting properties according to the prior art.

The amount of carboxymethyl cellulose in the peat compost of the invention is preferably from 50 to 500 grams, more preferably from 100 to 250 grams, per cubic metre of the loose uncompressed peat.

It is known that the optimum maximum electrical conductivity of a plant growth medium such as a peat compost is preferably 200 µS/cm for seed sowing, 450 µS/cm for potting and 600 µS/cm for mature plants, although values up to about 100 µS/cm higher than these are nevertheless acceptable. Technical grades of CMC contain free salts, in particular sodium chloride and sodium glycollate. Addition of technical CMC to peat therefore raises the electrical conductivity of the peat. Care should therefore be taken to ensure that the electrical conductivity of the peat compost of the invention is within acceptable limits for the desired end-use. Purified grades of CMC contain only low levels of such salts.

The peat compost of the invention may be prepared according to the process of the invention by mixing the peat and CMC together. Carboxymethyl cellulose is available commercially in the form of powder, and in one embodiment of the process of the invention the peat is mixed with CMC in powder form. In another embodiment of the process of the invention, the peat and CMC are mixed by treating the peat with an aqueous solution of CMC. This latter embodiment may be preferred, since it may be easier to achieve thorough and uniform mixing when it is used. The treatment may be accomplished by mixing the solution into the peat or by spraying the solution onto the peat. The CMC concentration of the solution may for example be in the range from 0.5 to 5.0% by weight, preferably from 1.0 to 2.0% by weight. CMC may be mixed with peat concurrently with conventional ingredients such as fertilisers or other nutrients, and this may be a preferred method. The mixed product is ready for use as the peat compost of the invention, and it does not require granulation, pressing or drying. It may be however be preferred to dry the peat compost for storage, particularly in the embodiment where peat is treated with an aqueous solution of CMC.

The peat compost of the invention exhibits improved rewetting properties compared with untreated peat. The peat compost of the invention is useful for the propagation of seeds and cuttings, for the cultivation of plants, for example in pots, and for tree planting. Plants grown in the compost of the invention have been found to resist the effects of lack of watering (wilting and death) for longer than plants grown in conventional peat compost. Many types of seed planted in the compost of the invention have been found to germinate more rapidly than seeds planted in conventional peat compost. Many types of plant have been found to grow more rapidly in the compost of the invention than in conventional peat compost.

The invention is illustrated by the following Examples.

### Example 1

The peat used in this Example was Solo Multi-purpose Compost supplied by White Moss Peat Company Limited, of Simonswood Moss Works, North Perimeter Road, Kirkby, Liverpool, United Kingdom. This compost consists of a blend of sphagnum moss peat, perlite, ground magnesium limestone, fertiliser and trace elements.

Sodium carboxymethyl cellulose available from Courtaulds plc under the Trade Mark 'Courgel' was provided in the form of a powder and had an activity of 67% as CMC and a viscosity of 12-20 mPa.s (centipoise) measured by Ostwald U-tube on a 1% solution in water at ambient temperature.

Re-wettability of peat was assessed by two methods, called the drop test and the soak test. In the drop test, a standard volume of peat compost was placed on the surface of a volume of water contained in a measuring cylinder, and the time for complete submersion or sinking was recorded. In the soak test, a 90 mm plant pot containing the peat compost was placed in a tray of water and the time for the surface of the peat to become moist under these bottom-watering conditions was recorded. Except in the Control, the peat compost was thoroughly mixed with 500 g/m³ of a solid agent (such as CMC) or with 500 ml/m³ of a liquid agent. The results, averaged in each case for 10 experiments, were as follows:

| | Drop test (sec) | Soak test (sec) |
|---|---|---|
| Control | 720 | 1080 |
| + CMC | 22 | 57 |
| + Aquagro 2000G | 11 | 38 |
| + Grofoam | 14 | 45 |

Aquagro 2000G (Trade Mark, a solid, available from Quatrols, Cherry Hill, New Jersey, USA) and Grofoam (Trade Mark, a liquid, available from Rhone-Poulenc Ltd) are commercial non-ionic surfactant-based products which are claimed to improve the rewetting characteristics of peat.

The above experiments were repeated, except that only 250 g/m³ or 250 ml/m³ of the three agents were used. The following results were obtained:

| | Drop test (sec) | Soak test (sec) |
|---|---|---|
| Control | 1200 | 1800 |
| + CMC | 58 | 126 |
| + Aquagro 2000G | 14 | 41 |
| + Grofoam | 30 | 59 |

The above experiments were repeated, except that only 100 g/m³ of the agents CMC and Aquagro 2000 G were used. The following results were obtained:

| | Drop test (sec) | Soak test (sec) |
|---|---|---|
| Control | 1080 | 1680 |
| + CMC | 163 | 286 |
| + Aquagro 2000G | 28 | 79 |

### Example 2

The same peat and CMC were used as in Example 1. The peat and polymer were mixed together either by spraying a solution of polymer onto the peat (for the lower addition rates) or by thorough dry mixing (for the higher addition rates). The water retention (water holding capacity) (WR, in percent weight/weight) and air-filled porosity (AFP, in percent volume/volume) of each sample were measured according to British Standard 4156:1990.

Plant growth trials were conducted as follows. Peat was placed in each of ten seed trays, and each tray was sown with exactly 100 seeds of the radish variety French Breakfast. The trays were then watered as required to produce the correct growing conditions for the seed. Plants began to emerge after 6 days. The plants were counted after 10 days, and the percentage germination was calculated. Once the plants had reached the true two-leaf stage, 10 plants were taken at random and potted into 75 mm plastic pots using the same peat. The pots from all the experiments were arranged in a greenhouse using a randomised block design to minimise any effect of pot position in the greenhouse. The pots were then watered as required, and the plants were grown until they had produced an edible root. Leaf number (the total number of true leaves per plant), leaf size (the length in mm from the petiole to the tip of the eldest true leaf), and leaf colour were measured at 5 weeks after planting and the average values calculated. Leaf colour was assessed on a scale of 1 (yellow, and undesirable) to 9 (green, and desirable). Root weight (the weight in g of the root as it would be sold) was measured at harvest approximately 8 weeks after planting, and the results were averaged.

The results obtained are tabulated below:

| Ref. | CMC g/m³ | WR % | AFP % | Germ. % | Leaf Number | Leaf Size mm | Leaf Colour | Root Weight g |
|---|---|---|---|---|---|---|---|---|
| Control | 0 | 172 | 9.0 | 95.2 | 3.4 | 30 | 8.4 | 3.4 |
| 1 | 50 | 189 | 8.5 | 96.4 | 3.2 | 30 | 8.2 | 3.2 |
| 2 | 100 | 181 | 8.0 | 96.0 | 3.4 | 47 | 8.6 | 4.1 |
| 3 | 250 | 177 | 8.5 | 95.4 | 3.7 | 50 | 8.1 | 4.4 |
| 4 | 500 | 182 | 8.0 | 95.4 | 3.4 | 41 | 8.5 | 4.0 |
| 5 | 1000 | 176 | 8.9 | 96.6 | 3.3 | 43 | 8.6 | 4.0 |

Addition of CMC to the peat had no statistically significant effect on WR, AFP, percentage germination, length of time from sowing to germination, leaf number, leaf colour or root weight. There was no evidence in any case of phytotoxicity to the radish plants, and in particular there was no evidence of any chlorosis, necrosis or deformation. Addition rates of 100-250 g/m³ gave a statistically significant increase in leaf size.

### Example 3

The same peat and CMC were used as in Example 1. CMC (100 or 250 g/m³ on peat) was premixed with fertiliser (3 kg/m³ on peat) and this premix was blended with the peat to provide a compost. Peat compost containing the same amount of fertiliser but no CMC was used as control. Ten seed trays were filled with each peat compost and each tray was sown with ten seeds of Impatiens (Bizzy Lizzie) (Florette Star Mixed F1 Hybrid, Lot No. 450109). Once germination had been completed, ten plants from each trial were transplanted into 90 mm pots. Height, leaf number and leaf colour were assessed 50 days after transplanting; leaf colour was assessed as in Example 2. The following results were obtained:

| CMC g/m³ | % Germination Days from Sowing | | | Height mm | Leaf Number | Leaf Colour |
|---|---|---|---|---|---|---|
| | 7 | 14 | 21 | | | |
| 0 | 8.1 | 26.9 | 64.2 | 73.5 | 9.1 | 6.7 |
| 100 | 9.8 | 35.4 | 63.5 | 88.5 | 8.9 | 7.0 |
| 250 | 9.7 | 31.3 | 63.0 | 98.0 | 9.3 | 7.1 |

The rate of germination was greater by a statistically significant amount for the composts containing CMC. Plant height was significantly greater when a peat compost according to the invention was used. The presence of CMC had no significant effect on total germination, leaf number or leaf colour.

### Example 4

Example 3 was repeated, except that Salvia seeds (Phoenix Mixed, Lot No. 4120889) were used. The following results were obtained:

| CMC g/m³ | % Germination Days from Sowing | | | Height mm | Leaf Number | Leaf Colour |
|---|---|---|---|---|---|---|
| | 7 | 14 | 21 | | | |
| 0 | 18.7 | 57.2 | 96.2 | 125.0 | 5.5 | 6.5 |
| 100 | 22.0 | 67.8 | 94.0 | 142.3 | 6.0 | 6.8 |
| 250 | 22.6 | 78.2 | 95.8 | 154.5 | 6.0 | 6.8 |

The use of a peat compost containing CMC significantly increased the rate of germination. The height of the plants was significantly higher when peat composts containing 100 and 250 g/m³ CMC were used. The presence of CMC had no significant effect on total germination, leaf number or leaf colour.

### Example 5

Example 3 was repeated, except that Tomato seeds (Moneymaker, Lot No. 3225) were used. The following results were obtained:

| CMC g/m³ | % Germination Days from Sowing | | | Height mm | Leaf Number | Leaf Colour |
|---|---|---|---|---|---|---|
| | 7 | 14 | 21 | | | |
| 0 | 23.8 | 80.5 | 98.4 | 191.5 | 6.0 | 5.7 |
| 100 | 23.8 | 91.8 | 98.8 | 249.0 | 6.9 | 5.9 |
| 250 | 23.5 | 89.4 | 98.4 | 221.5 | 6.5 | 6.1 |

The use of peat compost containing CMC produced a significant increase in percentage germination at the 14-day stage. The use of peat compost containing CMC produced a significant increase in plant height, particularly when 100 g/m³ CMC was used. The presence of CMC had no significant effect on total germination, leaf number or leaf colour.

### Example 6

Salvia plants were grown from seed in peat-based compost containing 0 or 250 g/m³ CMC as in Example 2. Once the plants were well established, watering was discontinued (Warrington, England, warm July weather). The following observations were made:

| CMC g/m³ | 6 days from last watering | 11 days from last watering |
|---|---|---|
| 0 | Plants wilting badly | Plants dead Compost dusty and dry |
| 250 | Plants appear healthy | Plants showing signs of stress Compost dry but not dusty |

The plants grown in the peat compost of the invention resisted lack of watering considerably better than those grown in untreated compost.

### Example 7

Various plants were grown from seed or from cuttings in peat compost containing 250 g/m³ CMC as described in Example 2. The peat compost had a conductivity of 316 µS/cm. The same plants were also grown in a peat compost made from a different peat containing no CMC and having a conductivity of 640 µS/cm. It should be noted that the difference in conductivity is sufficient to affect the reliability of direct comparisons. The following plants were grown from seed:
Lobelia
Begonia
Swiss Pansy
Petunia
Verbena
Marigold
Nemesia
Dianthus
Antirrhinum
Alyssum
Lettuce
Dwarf French Bean
Cucumber
Carrot
Salad Cress

The following plants were grown from cuttings:
Escalonia
Hebe
Verbena
Fuchsia
Geranium

There was no evidence of any phytotoxic effects in any case. Dwarf French Bean, Marigold and Alyssum grew more rapidly in the treated peat compost. Petunia and Dianthus grew less rapidly in the treated peat compost; it should be noted that these species are known to prefer a drier compost. Geranium and Verbena cuttings performed similarly in both peat composts. Fuchsia and Hebe cuttings performed slightly better, and Escalonia considerably better, in the treated peat compost.

### Example 8

Peat was mixed with 250 g/m³ of either CMC or Aquagro 2000G as described in Example 1. Growing trays were filled with the treated peat composts and stored in a warm glasshouse. The trays were watered each day in the same manner as trays containing growing plants. Samples were removed from the trays from time to time and dried overnight in an oven at 100°C, and their re-wettability was assessed by the drop test. The following results (in seconds), averaged in each case for 10 experiments, were obtained:

| | Storage time months | | | |
|---|---|---|---|---|
| | 0 | 1 | 2 | 3 |
| + CMC | 66 | 58 | 60 | 56 |
| + Aquagro 2000G | 18 | 15 | 14.5 | 13 |

### Example 9

Peat was mixed with 250 g/m³ of either CMC or Aquagro 2000G as described in Example 1. The peat composts were repeatedly watered and dried in an oven at 100°C overnight, and their re-wettability was assessed by the soak test. The following results (in seconds) were obtained on the dried peat composts, being in each case the average of 10 experiments:

| Wet/dry/cycles | + CMC | + Aquagro 2000G |
|---|---|---|
| 0 | 142 | 49 |
| 2 | 139 | 48 |
| 4 | 132 | 47 |
| 6 | 131 | 46 |
| 8 | 125 | 45 |
| 10 | 113 | 43 |
| 12 | 116 | 40 |
| 14 | 118 | 39 |
| 16 | 116 | 39 |
| 18 | 113 | 38 |
| 20 | 115 | 39 |
| 22 | 118 | 37 |
| 24 | 116 | 35 |
| 25 | 116 | 34 |

## Claims

1. A peat compost, characterised in that the compost consists essentially of peat in loose uncompressed form and, in addition to any conventional ingredients, from 50 to 1000 grams carboxymethyl cellulose per cubic metre of loose uncompressed peat in uniform admixture with the peat

2. A peat compost according to claim 1, characterised in that the compost contains from 50 to 500 grams carboxymethyl cellulose per cubic metre of loose uncompressed peat.

3. A peat compost according to claim 2, characterised in that the compost contains from 100 to 250 grams carboxymethyl cellulose per cubic metre of loose uncompressed peat.

4. A peat compost according to any preceding claim, characterised in that the carboxymethyl cellulose has a degree of substitution in the range from 0.4 to 1.1.

5. A peat compost according to claim 4, characterised in that the carboxymethyl cellulose has a degree of substitution in the range from 0.5 to 0.9.

6. A peat compost according to any preceding claim, characterised in that the viscosity of a 1 percent by weight aqueous solution of the carboxymethyl cellulose is in the range from 5 to 100 mPa.s (centipoise) measured under low-shear conditions at ambient temperature.

7. A peat compost according to claim 6, characterised in that the viscosity of a 1 per cent by weight aqueous solution of the carboxymethyl cellulose is in the range from 10 to 25 mPa.s (centipoise) measured under low-shear conditions at ambient temperature.

8. A process for the manufacture of a peat compost according to any preceding claim, characterised in that carboxymethyl cellulose in solid form is uniformly mixed with the peat.

9. A process for the manufacture of a peat compost according to any one of claims 1 to 8, characterised in that an aqueous solution of carboxymethyl cellulose is uniformly mixed with the peat.

10. A process according to claim 9, characterised in that the concentration of the carboxymethyl cellulose in the aqueous solution is in the range from 0.5 to 5.0 percent by weight.

11. A process according to claim 10, characterised in that the concentration of the carboxymethyl cellulose in the aqueous solution is in the range from 1.0 to 2.0 percent by weight.

12. A process according to any one of claims 9 to 11, characterised in that the peat compost is dried subsequent to the mixing step.

13. A process according to any one of claims 8 to 12, characterised in that the carboxymethyl cellulose is mixed with the peat concurrently with one or more conventional fertilisers.

14. A method for the cultivation of plants, characterised in that the plants are grown from seeds or cuttings in a peat compost according to any one of claims 1 to 8 or prepared according to the process of any one of claims 9 to 13.

15. A method for the cultivation of plants, characterised in that the plants are transplanted into and grown in a peat compost according to any one of claims 1 to 8 or prepared according to the process of any one of claims 9 to 13.

## Patentansprüche

1. Torfkompost, dadurch gekennzeichnet, daß er im wesentlichen aus losem, ungepreßtem Torf und darin, gegebenfalls neben üblichen Bestandteilen, in einer Menge von 50 bis 1000 Gramm pro Kubikmeter des losen, ungepreßten Torfs einheitlich eingemischter Carboxymethylcellulose besteht.

2. Torfkompost nach Anspruch 1, dadurch gekennzeichnet, daß der Kompost pro Kubikmeter des losen, ungepreßten Torfs 50 bis 500 Gramm Carboxymethylcellulose enthält.

3. Torfkompost nach Anspruch 2, dadurch gekennzeichnet, daß der Kompost pro Kubikmeter des losen, ungepreßten Torfs 100 bis 250 Gramm Carboxymethylcellulose enthält.

4. Torfkompost nach einem der vorhergehenden Ansprüche` dadurch gekennzeichnet, daß die Carboxymethylcellulose einen Substitutionsgrad im Bereich von 0,4 bis 1,1 aufweist.

5. Torfkompost nach Anspruch 4, dadurch gekennzeichnet, daß die Carboxymethylcellulose einen Substitutionsgrad im Bereich von 0,5 bis 0,9 aufweist.

6. Torfkompost nach einem der vorhergehenden Ansprüche, dadurch gekennzeichnet, daß eine 1 gew.-%ige wäßrige Lösung der Carboxymethylcellulose eine Viskosität, gemessen unter geringer Scherbelastung und bei Raumtemperatur, im Bereich von 5 bis 100 mPa.s (Centipoise) aufweist.

7. Torfkompost nach Anspruch 6, dadurch gekennzeichnet, daß eine 1 gew.-%ige wäßrige Lösung der Carboxymethylcellulose eine Viskosität, gemessen unter geringer Scherbelastung und bei Raumtemperatur, im Bereich von 10 bis 25 mPa.s (Centipoise) aufweist.

8. Verfahren zur Herstellung eines Torfkomposts gemäß einem der vorhergehenden Ansprüche, dadurch gekennzeichnet, daß man den Torf einheitlich mit fester Carboxymethylcellulose vermischt.

9. Verfahren zur Herstellung eines Torfkomposts gemäß einem der Ansprüche 1 bis 8, dadurch gekennzeichnet, daß man den Torf einheitlich mit einer wäßrigen Carboxymethylcellulose-Lösung vermischt.

10. Verfahren nach Anspruch 9, dadurch gekennzeichnet, daß man eine wäßrige Carboxymethylcellulose-Lösung mit einer Carboxymethylcellulose-Konzentration im Bereich von 0,5 bis 5,0 Gew.-% einsetzt.

11. Verfahren nach Anspruch 10, dadurch gekennzeichnet, daß man eine wäßrige Carboxymethylcellulose-Lösung mit einer Carboxymethylcellulose-Konzentration im Bereich von 1,0 bis 2,0 Gew.-% einsetzt.

12. Verfahren nach einem der Ansprüche 9 bis 11, dadurch gekennzeichnet, daß man den Torfkompost nach dem Vermischen trocknet.

13. Verfahren nach einem der Ansprüche 8 bis 12, dadurch gekennzeichnet, daß man den Torf mit der Carboxymethylcellulose und gleichzeitig mit einem oder mehreren üblichen Düngemitteln vermischt.

14. Verfahren zur Kultivierung von Pflanzen, dadurch gekennzeichnet, daß man die Pflanzen in einem Torfkompost gemäß einem der Ansprüche 1 bis 8 oder in einem gemäß einem der Ansprüche 9 bis 13 hergestellten Torfkompost aus Samen oder Ablegern zieht.

15. Verfahren zur Kultivierung von Pflanzen, dadurch gekennzeichnet, daß man die Pflanzen in einen Torfkompost gemäß einem der Ansprüche 1 bis 8 oder in einen gemäß einem der Ansprüche 9 bis 13 hergestellten Torfkompost umpflanzt und darin zieht.

## Revendications

1. Compost de tourbe, caractérisé en ce que le compost est constitué essentiellement de tourbe sous forme libre non comprimée et, outre tout autre ingrédient classique, de 50 à 1000 grammes de carboxyméthylcellulose par mètre cube de tourbe libre non comprimée en mélange uniforme avec la tourbe.

2. Compost de tourbe selon la revendication 1, caractérisé en ce que le compost contient de 50 à 500 grammes de carboxyméthylcellulose par mètre cube de tourbe libre non comprimée.

3. Compost de tourbe selon la revendication 2, caractérisé en ce que le compost contient de 100 à 250 grammes de carboxyméthylcellulose par mètre cube de tourbe libre non comprimée.

4. Compost de tourbe selon l'une quelconque des revendications précédentes, caractérisé en ce que la carboxyméthylcellulose présente un degré de substitution dans la gamme de 0,4 à 1,1.

5. Compost de tourbe selon la revendication 4, caractérisé en ce que la carboxyméthylcellulose présente un degré de substitution dans la gamme de 0,5 à 0,9.

6. Compost de tourbe selon l'une quelconque des revendications précédentes, caractérisé en ce que la viscosité d'une solution aqueuse de carboxyméthylcellulose à 1 pour cent en poids est dans la gamme de 5 à 100 mPa.s (centipoise) mesurée dans des conditions de cisaillement peu élevé à température ambiante.

7. Compost de tourbe selon la revendication 6, caractérisé en ce que la viscosité d'une solution aqueuse de carboxylméthylcellulose à 1 pour cent en poids est dans la gamme de 10 à 25 mPa.s (centipoise) mesurée dans des conditions de cisaillement peu élevé à température ambiante.

8. Procédé de fabrication d'un compost de tourbe selon l'une quelconque des revendications précédentes, caractérisé en ce que la carboxyméthylcellulose sous forme solide est mélangée de manière uniforme avec la tourbe.

9. Procédé de fabrication d'un compost de tourbe selon l'une quelconque des revendications 1 à 8, caractérisé en ce qu'une solution aqueuse de carboxyméthylcellulose est mélangée de manière uniforme avec la tourbe.

10. Procédé selon la revendication 9, caractérisé en ce que la concentration de la carboxyméthylcellulose dans la solution aqueuse est dans la gamme de 0,5 à 5,0 pour cent en poids.

11. Procédé selon la revendication 10, caractérisé en ce que la concentration de la carboxyméthylcellulose dans la solution aqueuse est dans la gamme de 1,0 à 2,0 pour cent en poids.

12. Procédé selon l'une quelconque des revendications 9 à 11, caractérisé en ce que le compost de tourbe est séché à la suite de l'étape de mélange.

13. Procédé selon l'une quelconque des revendications 8 à 12, caractérisé en ce que la carboxyméthylcellulose est mélangée avec la tourbe simultanément avec un ou plusieurs engrais classiques.

14. Méthode de culture de plantes, caractérisée en ce que les plantes sont cultivées à partir de graines ou de boutures dans un compost de tourbe selon l'une quelconque des revendications 1 à 8 ou préparé selon le procédé de l'une quelconque des revendications de 9 à 13.

15. Méthode de culture de plantes, caractérisée en ce que les plantes sont transplantées et cultivées dans un compost de tourbe selon l'une quelconque des revendications 1 à 8 ou préparé selon le procédé de l'une quelconque des revendications 9 à 13.
